(19) Europäisches Patentamt

European Patent Office

Office européen des brevets

(11) Veröffentlichungsnummer: **0 462 518 B1**

(12) # EUROPÄISCHE PATENTSCHRIFT

(45) Veröffentlichungstag der Patentschrift: **27.09.95**

(21) Anmeldenummer: **91109780.6**

(22) Anmeldetag: **14.06.91**

(51) Int. Cl.⁶: **B65G 59/02**, B65G 60/00, B65G 1/04

(54) **Verfahren und Vorrichtung zum Aufnehmen bzw. Absetzen von paketförmigem Gut.**

(30) Priorität: **20.06.90 CH 2051/90**

(43) Veröffentlichungstag der Anmeldung:
**27.12.91 Patentblatt 91/52**

(45) Bekanntmachung des Hinweises auf die
Patenterteilung:
**27.09.95 Patentblatt 95/39**

(84) Benannte Vertragsstaaten:
**AT BE CH DE ES FR GB IT LI NL SE**

(56) Entgegenhaltungen:
DE-A- 2 631 942    DE-A- 3 733 461
DE-B- 1 229 914    JP-A- 5 742 426
US-A- 3 070 241    US-A- 4 453 874

(73) Patentinhaber: **Digitron AG**
**Bahnhofstrasse 96**
**CH-5000 Aarau (CH)**

(72) Erfinder: **Wohlfahrt, Andreas**
**Im Wienäckern 11**
**W-4358 Haltern (DE)**
Erfinder: **Krieg, Walter**
**Orpundstrasse 30 A**
**CH-2555 Brügg (CH)**

(74) Vertreter: **Blum, Rudolf Emil Ernst et al**
**c/o E. Blum & Co**
**Patentanwälte**
**Vorderberg 11**
**CH-8044 Zürich (CH)**

## Beschreibung

Die Erfindung betrifft ein verfahren und eine Vorrichtung zum Aufnehmen bzw. Absetzen von paketförmigem Gut von bzw. auf einer Unterlage mittels einem horizontal verfahrbaren Aufnahmetisch, wobei der Aufnahmetisch mindestens an seiner Oberseite eine antreibbare Transporteinrichtung für das Gut und mindestens an seinem in Fahrrichtung liegenden Ende ein rollen- bzw. umlenkrollenartiges Aufnahmeorgan besitzt.

Solche Vorrichtungen sind als sogenannte Depalettierungs-Vorrichtungen bekannt geworden, wozu beispielsweise auf die DE-A-26 31 942 verwiesen wird. Sie dienen dazu, paketförmiges Gut, wie beispielsweise Schachteln, Kisten und dergleichen, aus einem Lager zu entnehmen. Dabei wird eine Rolle mit einer Seite einer Packung derart in Berührung gebracht, dass diese durch Reibungsberührung angehoben wird, wonach sie durch eine Transporteinrichtung erfasst und wegtransportiert wird. Dabei stellt sich insbesondere das Problem, Beschädigungen des aufzunehmenden Guts, bzw. von dessen Verpackung, zu vermeiden und andererseits trotzdem einen definierten und sicheren Aufnahmevorgang zu gewährleisten.

In der eingangs genannten DE-A wurde deshalb die Aufnahmerolle in einer horizontalen Ebene elastisch an einem Schlitten derart gelagert, dass bei der Bewegung des Schlittens in Richtung auf die Packung eine fortschreitend zunehmende Reibungshubkraft auf die Packung ausgeübt wird. Nachdem die Aufnahmerolle also während längerer Zeit unter zunehmender Reibung an der Packung anliegend rotiert hat, wird diese zu einem unbestimmten Zeitpunkt und dementsprechend bei einer unbestimmten Schlittenlage erfasst, worauf die nun vorgespannte Rolle unter die Packung schnellt.

Dieser Vorgang führt insbesondere bei empfindlichen Packungen leicht zu deren Beschädigung; mindestens bleiben Reibspuren daran zurück. Die nach vorne schnellende Rolle kann die Packungen je nach den Gewichtsverhältnissen aus dem Gleichgewicht bringen und sie auf ihrer Unterlage verschieben oder beschädigen. Ferner ist der Aufnahmezeitpunkt ungewiss, was die Automatisierung des Vorgangs erschwert.

Es sind auch schon andere Vorschläge für derartige Vorrichtungen gemacht worden, welche indessen zur Gutaufnahme exakt in der Höhe der Packungsunterkante positioniert werden müssen (vergl. z.B. US Defensive publication T 998, 009), was eine Automatisierung fast verunmöglicht. Eine nicht ganz exakte Positionierung in der Höhe führt wiederum zur Beschädigung des Guts, welches im übrigen dann auch nicht aufgenommen werden kann.

Schliesslich ist es zum Entstapeln von ganz bestimmten Getränkekisten aus der DE-B-2 137 827 bekannt, eine unter Reibkontakt arbeitende, rampenförmige Aufnahmevorrichtung zu verwenden, die mit einer Hubeinrichtung zusammenwirkt, um die Kisten in die Bewegungsbahn eines sich stetig vorwärts bewegbaren Förderers zu bringen. Diese Einrichtung ist auf ganz bestimmte Kisten abgestimmt und beruht im übrigen darauf, dass die Kisten beim Aufnehmen gegenüber ihrer Unterlage verschoben werden.

In JP-A-57-42426 und US-3 070 241 werden Vorrichtungen beschrieben, bei welchen das aufzunehmende Gut ebenfalls von den Stirnrollen eines Aufnahmetisches in Reibkontakt hochgehoben und sodann unterfahren wird. Insbesondere bei JP-A-57-42426 wird dabei das Gut gegenüber der Unterlage nicht oder nur wenig verschoben, sofern es den Stirnrollen gelingt, das Gut rechtzeitig anzuheben. Da das Anheben jedoch sehr schnell vor sich gehen muss, kann es auch hier zu Beschädigungen kommen.

Keine dieser angesprochenen Einrichtungen ist ferner in der Lage, das aufgenommene Gut auch wieder ortsbestimmt abzusetzen.

Es stellt sich deshalb die Aufgabe, ein Verfahren und eine Vorrichtung zum Aufnehmen, bzw. ortsbestimmten Absetzen von paketförmigem Gut zu schaffen, welche ein beschädigungsfreies, sowie zeitlich und örtlich definiertes Aufnehmen und gegebenenfalls ein entsprechendes Absetzen von paketförmigem Gut gestatten.

Die erfindungsgemässe Vorrichtung soll dabei insbesondere dazu geeignet sein, in einer automatisierten Kommissionieranlage eingesetzt zu werden, in welcher unterschiedliche Packungen aus einem Lager auf Kundenpaletten bestellungsgemäss kommissioniert werden.

Nachfolgend werden anhand der Zeichnungen Ausführungsbeispiele der erfindungsgemässen Vorrichtung und des erfindungsgemässen Verfahrens näher erläutert. Es zeigen darin:

Fig. 1 die schematische Darstellung des Aufnahmevorgangs einer starren Packung in fünf Phasen;

Fig. 2 die Darstellung des Betriebs bei einer Anordnung mit zwei Aufnahmestellungen und einer dazwischen liegenden Absetzstelle für biegeschlaffe Packungen;

Fig. 3 die Darstellung der Anordnung von Fig. 2 in einer zweiten Betriebsphase;

Fig. 4 ein Geschwindigkeits-Weg-Diagramm zu den Anordnungen von Fig. 2 und 3;

Fig. 5 eine konkrete Ausführung der Anordnung gemäss den Figuren 2 und 3 in Aufsicht;

Fig. 6 eine schematische Seitenansicht davon;

Fig. 7 eine weitere Ausführung des Aufnahmetisches in einer ersten Betriebsphase;

Fig. 8 die Ausführung nach Fig. 7 in einer zweiten Betriebsphase;

Fig. 9 eine dritte Ausführung des Aufnahmetisches in teilweiser Ansicht;

Fig. 10 die Ausführung nach Fig. 9 in Seitenansicht;

Fig. 11 den Aufnahmekorb einer Kommissionieranlage in einem Regallager in perspektivischer Ansicht mit eingebautem Aufnahmetisch;

Fig. 12 der Aufnahmekorb nach Fig. 11 in Funktion in einem Regalförderzug;

Fig. 13 die Entnahme von kommissionierten Gut-Trägern aus dem Aufnahmekorb;

Fig. 14 die Uebernahme des kommissionierten Guts von einem Gut-Träger auf einer Normpalette;

Fig. 15 eine erste Hilfseinrichtung zur Aufnahme schwerer Packungen, und

Fig. 16 eine zweite Hilfseinrichtung zur Aufnahme leicht rutschender Packungen.

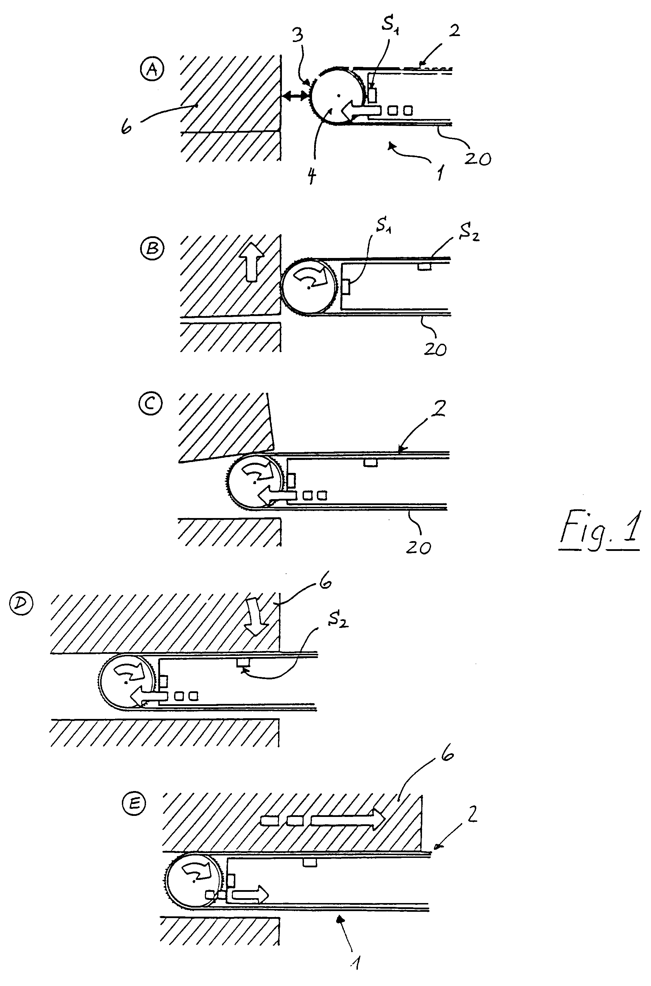

Anhand der Figuren 1 bis 4 soll zunächst das Funktionsprinzip des erfingsgemässen Aufnahmevorgangs erläutert werden, ohne dass auf konstruktive Details eingegangen wird. Solche werden dann anhand der weiteren Figuren erläutert.

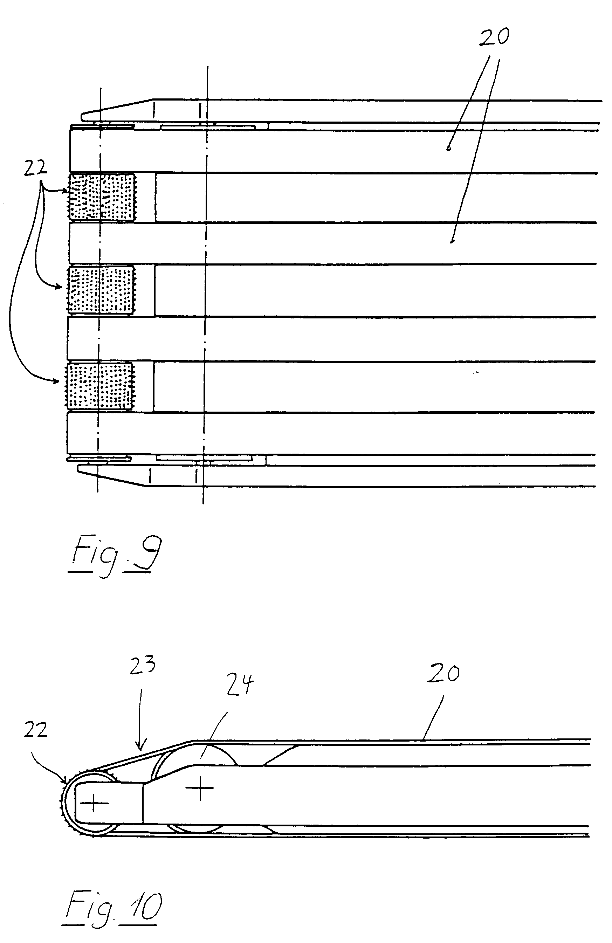

In der Figur 1 wird zunächst der Aufnahmevorgang anhand einer starren Packung 6 in fünf Phasen erläutert. Die einzelnen Phasen sind in ihrer Reihenfolge mit den Buchstaben A bis E bezeichnet. Aus Figur 1 ist der Aufnahmetisch 1 mit einer Transporteinrichtung 2 für das Gut an seiner Oberseite und einem Aufnahmeorgan 3 an seiner Vorderseite ersichtlich. Der Aufnahmetisch 1 ist horizontal verfahrbar, wozu ein erster Antrieb vorgesehen ist. Mittels einem zweiten Antrieb wird hier sowohl die Transporteinrichtung 2, welche die Gestalt eines oder mehrerer umlaufender Bänder besitzt, als auch das Aufnahmeorgan 3 angetrieben, das durch die entsprechenden Umlenkrollen 4 gebildet wird (vergl. z.B. Fig. 5).

In der ersten Phase A nähert sich der Aufnahmetisch 1 der aufzunehmenden Packung 6 mit normaler Fahrgeschwindigkeit. Bei Annäherung des Aufnahmetisches an die Packung 6 reduziert sich die Fahrgeschwindigkeit des Aufnahmetisches 1. Falls die Packungen 6 nicht an einer normierten Stelle aufgenommen werden, wird ihre Position deshalb mit einem Näherungs-Sensor $S_1$ am Aufnahmetisch festgestellt, womit durch entsprechende Steuerung des ersten Antriebs die Fahrgeschwindigkeit reduziert wird. In Phase B berührt deshalb der Aufnahmetisch 1 die Stirnfläche der Packung 6 mit kleiner Fahrgeschwindigkeit. Zugleich wird mittels des zweiten Antriebs das Aufnahmeorgan 3 angetrieben und zwar mit relativ grosser Geschwindigkeit. Gelangt das Aufnahmeorgan 3 zur Anlage an die Stirnfläche der Packung 6, so wird diese durch Reibung rasch angehoben, bevor sie durch den Aufnahmetisch 1 bezüglich ihrer Unterlage merklich verschoben wird. Ist die Packung in Phase C mit ihrer Vorderseite auf Tischhöhe gelangt, so wird die Fahrgeschwindigkeit des Aufnahmetisches 1 wieder erhöht und zugleich die Transporteinrichtung 2 mit der gleichen Geschwindigkeit gegenläufig dazu angetrieben, so dass der Aufnahmetisch die Packung unterfährt, ohne dass diese gegenüber ihrer Unterlage verschoben wird. Ist sie soweit unterfahren, dass sie von der Unterlage abhebt, was bei starren Packungen in der Regel nach dem Unterfahren über deren Mitte hinaus geschieht (Phase D), kann die Fahrrichtung des Aufnahmetisches 1 umgekehrt und die Packung mit der Transporteinrichtung 2 ganz auf den Tisch verschoben werden (Phase E). Dieser Umkehrpunkt lässt sich ebenfalls mit einem Sensor $S_2$ bestimmen, der anspricht, sobald die Packung 6 auf dem Aufnahmetisch aufliegt und damit von der Unterlage abgehoben hat. Andererseits ist es auch möglich, und bei biegeschlaffen Packungen vorteilhaft, die Phase C des Unterfahrens bis zum Packungsende auszudehnen, so dass bei Normpackungen der Sensor $S_2$ nicht notwendig ist. Für einen zeitsparenden Betrieb kann aber auch vorgesehen sein, die Packung 6 nur soweit zu unterfahren, bis sie mit ihrem Gewicht hauptsächlich auf dem Aufnahmetisch ruht und schon dann die Phase E einzuleiten.

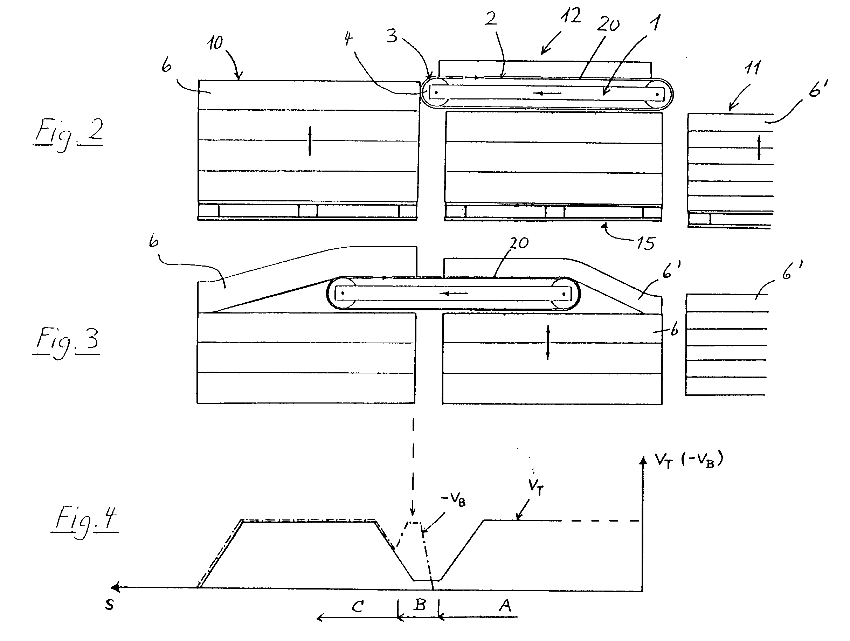

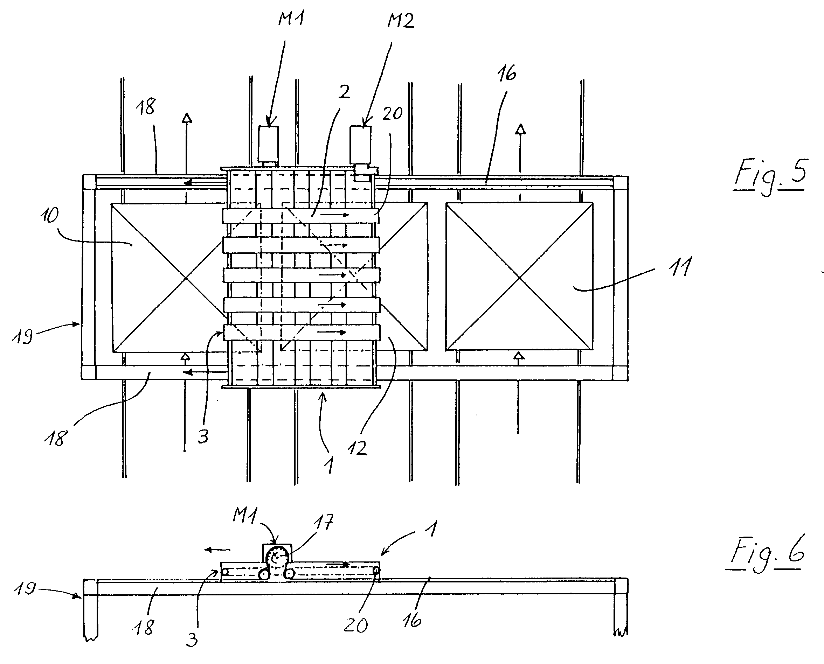

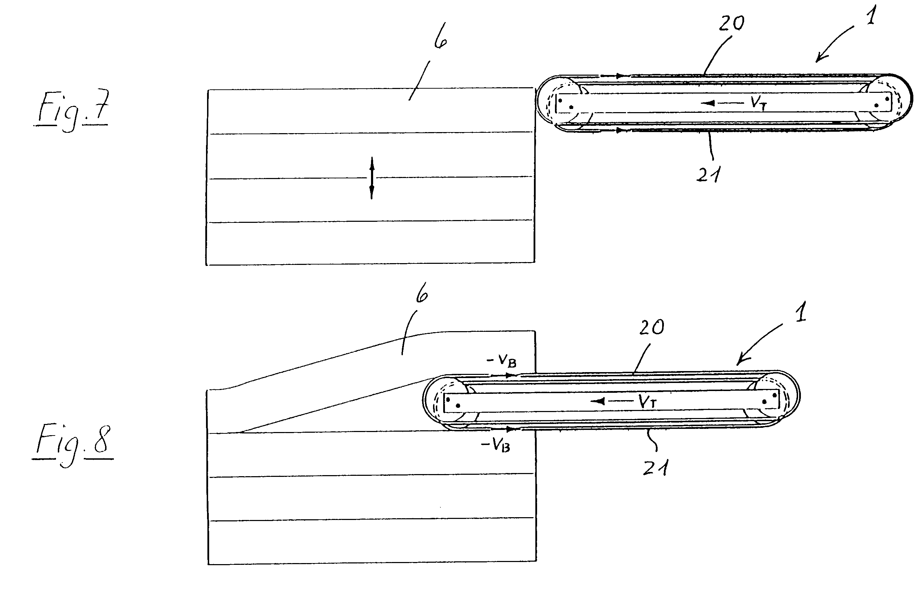

Der entsprechende Vorgang bei der Aufnahme von biegeschlaffen Packungen, wie sie z.B. Papierriesen darstellen, ist in den Figuren 2 bis 4 dargestellt. Die hier gezeigte Kommissionieranordnung besitzt zwei Aufnahmestellen 10, 11, denen die aufzunehmenden Packungen 6, 6', im Beispiel Papierriese, sortenrein auf Paletten gestapelt, zugeführt werden. Dazwischen ist eine Absetzstelle 12 angeordnet, an welcher der Aufnahmetisch die wahlweise an den Aufnahmestellen aufgenommenen Packungen auf einer Kundenpalette 15 absetzt. Der Aufnahmetisch 1 bewegt sich in einer Horizontalebene zwischen diesen drei Stellen, wobei die Packungsstapel mittels Hubwerken auf die jeweilige Höhe angehoben werden. Die Figuren 2 und 3 zeigen zwei Betriebszustände, in welchen der Aufnahmetisch 1 daran ist, an der links gelegenen Aufnahmestelle 10 eine Packung 6 aufzunehmen und gleichzeitig eine zuvor an der rechten Aufnahmestelle 11 aufgenommene Packung 6' auf der Kundenpalette 15 abzusetzen. Vorläufig soll nur der Aufnahmevorgang interessieren. Hierzu ist auf das Geschwindigkeits-Weg-Diagramm in Fig. 4 zu verweisen, worin die Vorwärtsgeschwindigkeit $V_T$ des Aufnahmetisches 1 und die gegenläufige Geschwindigkeit $-V_B$ der Transporteinrichtung bzw. des Aufnahmeorgans in Abhängigkeit von der Lage der Tischvorderkante gezeigt ist. Wie vorstehend bereits beschrieben, wird die Geschwindigkeit $V_T$

des Aufnahmetisches bei der Annäherung an die aufzunehmende Packung 6 herabgesetzt (Phase B). Gleichzeitig wird die Umdrehgeschwindigkeit der Rolle 4 des Aufnahmeorgans 3 (= $V_B$) zu einem ersten Maximum erhöht, um durch Reibung die Vorderseite der Packung rasch auf das Niveau des Aufnahmetisches anzuheben, wobei die Packungen in der dafür benötigten kurzen Zeit wegen der langsamen Vorwärtsbewegung des Aufnahmetisches praktisch nicht gegen die Unterlage verschoben wird. Das langsame Anfahren des Aufnahmetisches 1 in Kombination mit der relativ raschen Drehung des Aufnahmeorgans 3 stellt damit sicher, dass das Anheben der Packungsvorderseite in sehr kurzer Zeit und damit ohne Verschiebung der Packung erfolgt. Auch beim nachfolgenden Unterfahren der Packung 6 erfolgt keine solche Relativverschiebung derselben gegenüber ihrer Unterlage, indem der Aufnahmetisch 1 und seine Transporteinrichtung 2 mit gegenläufig gleichen Geschwindigkeiten $V_T = - V_B$ angetrieben werden (Phase C).

Der beschriebene Aufnahmevorgang eignet sich damit insbesondere für empfindliche Packungen, wie z.B. in Packpapier eingewickelte, biegeschlaffe Papierriese. Es wird insbesondere vermieden, dass das Packpapier beim Aufnehmen reisst oder dass die Papierbogen gestaucht, geknickt oder anders beschädigt werden. Falls die Packungen 6, 6', wie in den Figuren 2 und 3 gezeigt, so an den Aufnahmestellen angeliefert werden, dass sich ihre Vorderkante innerhalb eines bestimmten Toleranzbereichs befinden, kann der Aufnahmevorgang ohne den Einsatz von Sensoren am Aufnahmetisch 1 wegabhängig gesteuert werden.

Aus Figur 3 lässt sich ferner der Absetzvorgang entnehmen, welcher mit dem Aufnahmevorgang für eine nächste Packung kombiniert, aber auch für sich allein ausgeführt werden kann. Der Aufnahmetisch 1 fährt hierzu über die Absetzstelle 12. Ist er dort angelangt, so wird die Transporteinrichtung 2 gegenläufig mit gleicher Geschwindigkeit in Gang gesetzt ($V_T = - V_B$),womit die Packung exakt an der Absetzstelle und ohne Relativverschiebung zur Unterlage abgesetzt wird. Im gezeigten Ausführungsbeispiel erfolgt das Absetzen einer zuvor aufgenommenen Packung 6 auf die Kundenpalette gleichzeitig mit dem Aufnehmen einer neuen Packung 6'. Dies ist deshalb sinnvoll und möglich, weil bei beiden Vorgängen die Fahrgeschwindigkeit $V_T$ des Aufnahmetisches 1 und die Antriebsgeschwindigkeit $V_B$ der Transporteinrichtung 2 gegenläufig gleich sind. Damit wird ein rationelles Kommissionieren der Kundenpalette 15 erzielt.

In den Figuren 5 und 6 ist eine konkrete Ausführung der beschriebenen Vorrichtung gezeigt. Auf einer Brücke 19, welche sich über die zwei Aufnahmestellen 10, 11 sowie die Absetzstelle 12 erstreckt, ist der Aufnahmetisch 1 in horizontalen Schienen 18 geführt, welche eine Operationsebene definieren. An den Aufnahmestellen 10, 11 und an der Absetzstelle 12 sind Hubwerke vorgesehen, mittels denen die jeweils oberste Packung auf die Operationshöhe anhebbar ist. Dies kann auf bekannte Weise mittels Lichtschranken erfolgen. Die Aufnahmestellen 10, 11 werden abwechselnd mit sortenreinen Paletten mit den zu kommissionierenden Packungen beschickt, welche in der beschriebenen Weise an der Absetzstelle 12 auf eine Kundenpalette abgesetzt werden. Der Aufnahmetisch wird durch einen steuerbaren Servomotor M 1 angetrieben, der über ein Treibrad 17 mit einem Zahnriemen 16 zusammenwirkt, welcher sich längs einer der Schienen 18 erstreckt. Ein zweiter Servo-Motor M 2 ist als Antrieb für die Transporteinrichtung 2 bzw. die Aufnahmeorgane 3 vorgesehen, welche durch umlaufende Bänder 2 gebildet werden. Der Servomotor M 2 treibt dazu auf einer Seite Bandumlenkrollen 20 an. Die Bänder 2 besitzen einen Belag mit hohem Reibungskoeffizienten, wozu sich z.B. das Polyurethanmaterial der Marke Linatex eignet. Die über die Umlenkrollen laufenden Bänder 20 wirken dort als Aufnahmeorgane 3, welche mittels Reibkraft an der Stirnfläche der Packungen angreifen. Sie wirken aber zugleich an der Oberseite des Aufnahmetisches 1 als Transportrichtung 2 zum Verschieben der Packungen bezüglich desselben.

Die Steuerung der Motoren M 1, M 2 erfolgt bei festgelegten Positionen der Packungen über einen mit dem Motor M 1 kombinierten Weg-Messaufnehmer, dessen Signale als Steuergrösse für die jeweiligen Betriebszustände ausgewertet werden. Bei nicht festgelegten Positionen der Packungen erfolgt die Steuerung, wie beschrieben, mittels Abstandssensoren.

Der beschriebene Aufnahmetisch übt also zugleich mehrere Funktionen aus, indem er zunächst als "Greifer" zum Aufnehmen von Packungen von einem Stapel, dann als Transporttisch zum Verschieben der Packungen von der Aufnahmestelle zur Absetzstelle und schliesslich als "Abschieber" der Packungen an der Absetzstelle dient, wobei alle Funktionen unter Schonung der Packung erfolgen.

Aus den Figuren 7 bis 10 ergibt sich, dass sich der konstruktive Aufbau des Aufnahmetisches 1 in verschiedener Hinsicht abwandeln und der Art der aufzunehmenden Packungen anpassen lässt.

In der bisherigen Beschreibung wurde stillschweigend davon ausgegangen, dass beim Aufnahme- und Absetzvorgang die Höhe des Aufnahmetisches 1 so eingestellt wird, dass seine Unterseite einen Abstand zur jeweiligen Unterlage hält (vergl. Fig. 1 bis 3). Dies ist notwendig, um eine Beschädigung der Unterlage bzw. der jeweils unteren Packung zu vermeiden, weil sich die Bewegung der Bänder 20 an der Unterseite des Tisches ja zur Fahrgeschwindigkeit addiert und damit eine hohe Reibung gegenüber der Unterlage entstünde.

Die Figuren 7 und 8 zeigen eine Ausführung, bei welcher an der Tischunterseite leicht nach innen und nach unten versetzt, Stützbänder 21 angeordnet sind, die vom gleichen Antrieb wie die Bänder 20, aber in entgegengesetzter Richtung zu diesen, angetrieben sind. Berührt die Unterseite des Aufnahmetisches 1 beim Aufnahme- oder Absetzvorgang die Unterlage (gewollt oder ungewollt), so bewegen sich die Stützbänder 21 ohne Relativverschiebung auf der Unterlage und vermeiden Beschädigungen daran. Dies gestattet es, die Höhenverstellung des Aufnahmetisches 1 bzw. der Packungen 6 relativ zueinander innerhalb grösserer Masstoleranzen vorzunehmen.

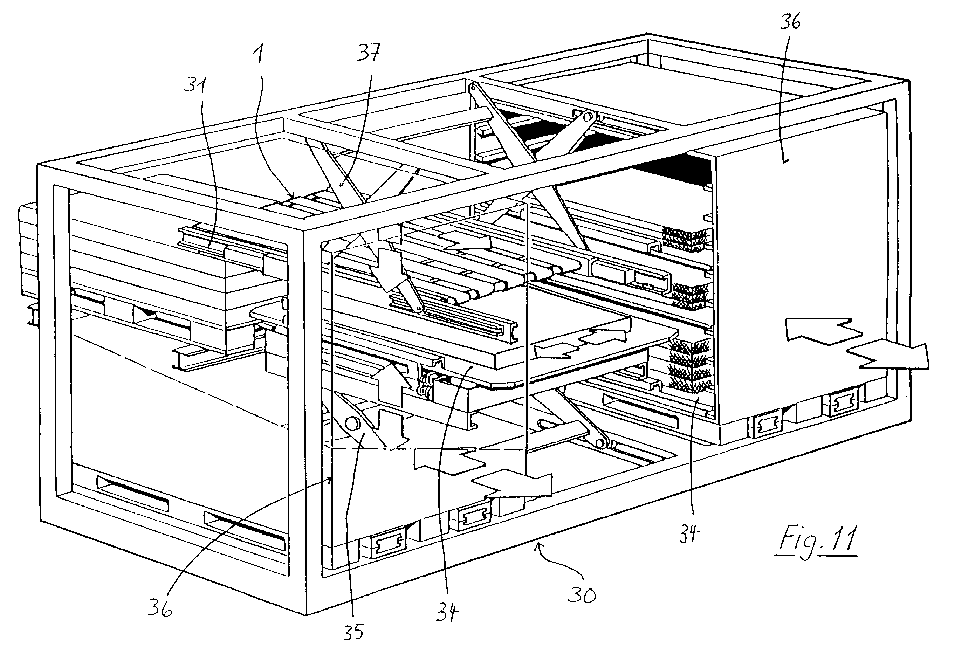

In den Figuren 9 und 10 ist der vordere Teil eines Aufnahmetisches 1 gezeigt, bei welchem die Aufnahmeorgane 3 von der Transporteinrichtung 2 getrennt sind. Letztere ist wiederum durch Bänder 20 gebildet, welche stirnseitig umgelenkt werden. Zwischen den Bändern 20 sind Rollen 22 angeordnet, die mit Stacheln besetzt sind. Solche Stachelrollen 22 sind insbesondere geeignet als Aufnahmeorgane für starre Packungen, wie Holzkisten und dergleichen, von höherem Eigengewicht. Sie können in Fahrrichtung gefedert sein. Der Aufnahmevorgang spielt sich dann wie folgt ab. Bei verlangsamter Fahrgeschwindigkeit werden die noch stillstehenden Rollen 22 zur Anlage an die Stirnfläche der aufzunehmenden Kisten gebracht. Dabei werden die Stacheln in die Packung eingedrückt, wonach die Rollen 22 zur Aufnahme der Packung in Gang gesetzt werden. Die Rollen stehen dabei unter Federkraft, womit sichergestellt werden kann, dass ihr Eingriff an der Stirnfläche beim Aufnahmevorgang erhalten bleibt. Im übrigen wickelt sich der Vorgang in der bereits beschriebenen Weise ab. Um die Hubhöhe herabzusetzen, kann ferner der vordere Teil des Aufnahmetisches eine Schräge 23 aufweisen, so dass der Durchmesser der Stachelrollen kleiner als die Tischhöhe ausgebildet sein kann. Dies wird mittels zusätzlichen Rollen 24 grösseren Durchmessers erzielt, die hinter den Stachelrollen 24 angeordnet sind und über welche die Bänder 20 laufen.

Es versteht sich, dass insbesondere bei einer solchen Anordnung die Aufnahmeorgane 22 einen eigenen Antrieb besitzen können und nur während des eigentlichen Aufnahmevorgangs (Phase B in Figur 1 oder 4) angetrieben werden.

Die bisher beschriebenen Anwendungen beziehen sich auf eine stationäre Kommissionieranlage, der jeweils sortenreine Packungspaletten aus einem Lager zugeführt werden, von welchen aus jeweils Packungen auf eine Kundenpalette transferiert werden. Solche Kommissionieranlagen eignen sich insbesondere für sogenannte "fast-mover"-Produkte. Darunter versteht man dasjenige, kleine Artikelsortiment, aus dem sich Bestellungen grossmehrheitlich zusammensetzen.

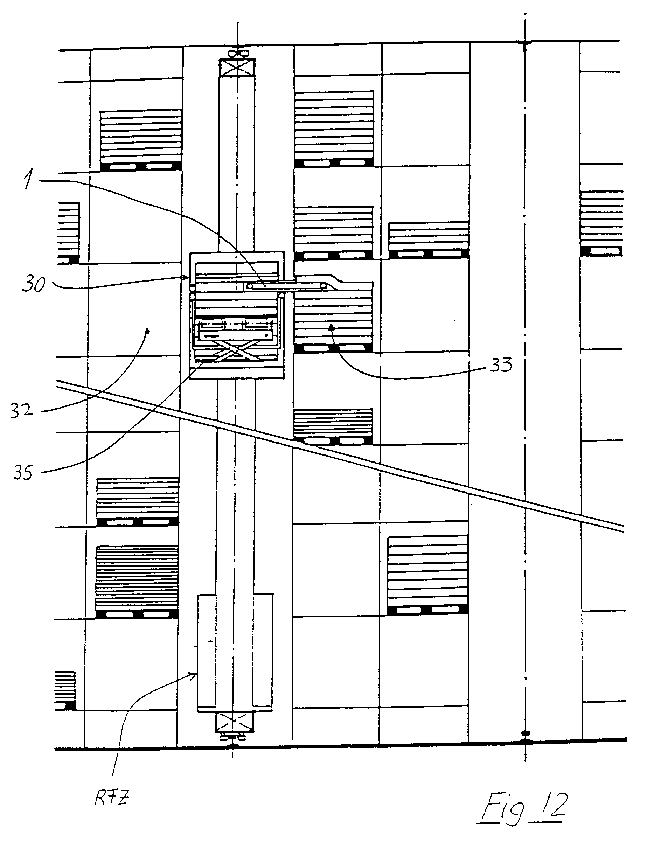

In einer weiteren Anwendung wird anhand der Figuren 11 bis 14 eine erfindungsgemässe Anlage beschrieben, bei welcher die Kommissionierung zur Einsparung der entsprechenden Transportwege direkt in einem Hochregallager erfolgt. Die Packungen werden dabei durch eine auf einem Regalförderzeug RFZ angeordnete Kommissionieranlage 30 direkt den Regalen entnommen, wie aus Figur 12 ersichtlich ist. In entsprechender Weise kann die Kommissionieranlage 30 auch auf einem leitdrahtgesteuerten, fahrerlosen Transportfahrzeug, einem sogenannten FTS, aufgebaut werden.

Die Kommissionieranlage besitzt einen Aufnahmetisch 1 der bereits beschriebenen Art, welcher über Teleskopschienen 31 (Figur 11) beidseitig in die Regale 32, 33 des Hochregallagers hinein ausfahrbar ist. Der Aufnahmetisch 1 ist ferner mittels eines Hubwerks 37 in der Kommissionieranlage höhenverstellbar aufgehängt.

Die Regale 32, 33 bilden damit die vorerwähnten Aufnahmestellen und die Aufnahme der Packungen (hier wieder biegeschlaffe Papierriese) erfolgt auf die bereits beschriebene Weise. Die Absetzstelle wird nun von einem Gutträger 34 in der Kommissionieranlage gebildet, auf den die Packungen vom Aufnahmetisch 1 abgesetzt werden. Dies kann jeweils gleichzeitig mit dem Aufnehmen einer neuen Packung aus einem Regal erfolgen, wie in Figur 3 bereits angedeutet. Der Gutträger 34 steht seinerseits auf einem Hubwerk 35 und ist von diesem in seitliche Behälter 36 einschiebbar, welche nach erfolgter Kommissionierung aus der Kommissionieranlage entnommen werden.

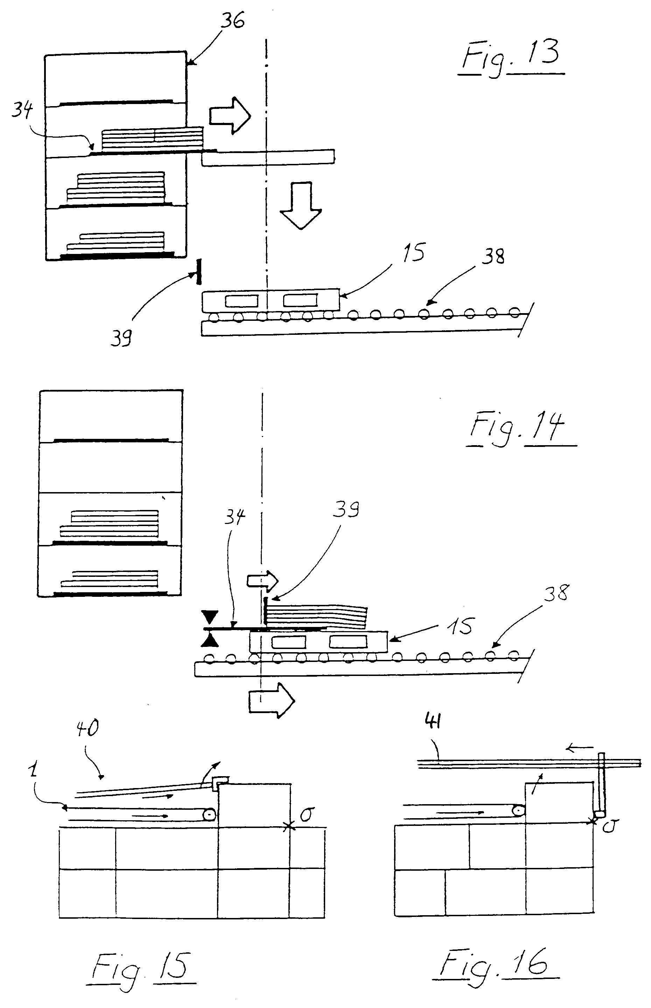

Die Funktionsweise dieser Anlage ist nun wie folgt: Das Regalförderzeug fährt gemäss Kundenbestellung nacheinander verschiedene Regale an und entnimmt mit dem Aufnahmetisch 1 jeweils eine gewünschte Anzahl Packungen, die auf einem Gutträger in der beschriebenen Weise abgesetzt werden. Zur Entnahme wird der Aufnahmetisch 1 mittels Sensoren und dem Hubwerk 37 auf die Höhe der obersten Packung eingestellt und der Gutträger 34 wird in entsprechende Höhenlage gebracht, damit eine gemeinsame Operationsebene entsteht, wie in den Figuren 2 und 3 gezeigt. Die Aufnahme und das Absetzen der Packungen erfolgt dann gemäss dem beschriebenen Verfahren. Ist für einen bestimmten Gutträger 34 die Kommissionierung abgeschlossen, so wird er seitlich in einen der Behälter 36 verschoben. Danach wird aus einem dieser Behälter ein weiterer Gutträger 34 entnommen und an die Absetzstelle verschoben, wonach der Kommissioniervorgang weitergeht. Sind die Behälter 36 entsprechend mit kommissionierten Gutträgern 34 gefüllt, fährt das Regalförderzeug an eine Entnahmestelle, die schematisch in den Figuren 13 und 14 gezeigt ist. Die gefüllten Behälter 36 werden dort gegen leere ausgetauscht, womit der Kommissioniervorgang sogleich fortgeführt werden kann.

Die Gutträger der gefüllten Behälter 36 anderseits werden aus den Behältern entnommen und auf eine Kundenpalette 15 abgesetzt, wie in den Figuren 13 und 14 gezeigt. Die Kundenpalette ist auf einer Förderrollenanordnung 38 gelagert, welche synchron zu einem Abschieber 39 angetrieben werden kann, während der Gutträger festgehalten wird. Auf diese Weise werden die kommissionierten Packungen zusammen vom Gutträger 34 auf die Kundenpalette abgeschoben, ohne dass letztere sich relativ zu den Packungen bewegt (Figur 14).

Diese Art der Kommissionierung von Packungen, insbesondere Papierriesen, ist vor allem geeignet für Kundenbestellungen, die aus einer grossen Anzahl unterschiedlicher Artikel zusammengestellt sind, so dass die Transportwege im Lager möglichst kurz zu halten sind.

Die anhand mehrerer Beispiele beschriebene Aufnahmevorrichtung und das entsprechende Betriebsverfahren besitzen gegenüber dem bisher Bekannten verschiedene Vorteile. Der Aufnahmetisch kann stirnseitig an die Packungen herangefahren werden, ohne dass in der Vertikalen oder in der Horizontalen exakte Positionen nötig sind. Die Fahrtoleranzen beim Aufnahmevorgang können damit relativ gross bleiben, ohne die Funktion zu beeinträchtigen oder das aufzunehmende Gut zu beschädigen. Da Relativverschiebungen zwischen den Packungen oder zwischen dem Aufnahmetisch und den Packungen vermieden werden, wirken auf die Packungen keine grossen Kräfte ein, welche zu Stauchungen der Packungen oder anderen Beschädigungen durch Krafteinwirkung führen würden. Es wird ferner vermieden, dass sich das Aufnahmeorgan längere Zeit an der Stirnseite der Packung rutschend dreht und diese damit durch mechanische oder Wärmeeinwirkung beschädigt wird. Die aufgenommenen Packungen werden auf dem Aufnahmetisch transportiert und von diesem ortsdefiniert wieder abgesetzt, so dass ein mehrfaches Umladen der Packungen zwischen Lager und Kundenpalette entfällt. Entsprechende Anlagen können sowohl stationär als auch beweglich auf Regalförderzeugen oder fahrerlosen Transportsystemen angeordnet sein. Sollen schwierig aufzunehmende Packungen kommissioniert werden, sei es, dass sie besonders schwer sind, oder dass sie besonders leicht auf ihrer Unterlage gleiten, kann der beschriebene Aufnahmetisch mit Hilfsvorrichtungen kombiniert werden. In Figur 15 ist schematisch eine Hilfsvorrichtung für besonders schwere Packungen gezeigt, welche gut auf ihrer Unterlage haften. Zusammen mit dem Aufnahmetisch 1 wirkt eine Hilfskippvorrichtung 40 auf die obere Vorderkante der Packung ein, welche bezüglich eines Kipp-Punktes 0 ein Drehmoment auf die Packung ausübt und somit die Wirkung des Aufnahmeorgans unterstützt. Figur 16 zeigt eine Haltevorrichtung 41, welche bei leicht rutschenden Packungen zur Anwendung kommen kann. Damit wird jeweils die hinterste Packung einer Packungsreihe hintergriffen und gegen die Wirkung des Aufnahmetisches 1 zurückgehalten. Damit wird sichergestellt, dass eine ausreichende Reibung zwischen dem Aufnahmeorgan und der aufzunehmenden Packung entsteht, damit diese an ihrer Vorderseite angehoben werden kann. Vorzugsweise greift die Haltevorrichtung im Bereich des Kipp-Punktes 0 der letzten Packung einer Packungsreihe an.

## Patentansprüche

1. Verfahren zum Aufnehmen bzw. Absetzen von paketförmigem Gut von bzw. auf einer Unterlage mittels einem horizontal verfahrbaren Aufnahmetisch (1), wobei der Aufnahmetisch mindestens an seiner Oberseite eine antreibbare Transporteinrichtung (2) für das Gut und mindestens an seinem in Fahrrichtung liegenden Ende ein rollen- bzw. umlenkrollenartiges Aufnahmeorgan (3) besitzt, wobei der Aufnahmetisch (1) mittels eines ersten Antriebs (M 1) in einer ersten Phase (Phase A) bis an eine vertikale Stirnfläche des aufzunehmenden Guts verfahren wird, wobei das Aufnahmeorgan (3) mittels eines zweiten Antriebs (M 2) mindestens ab diesem Zeitpunkt in einer zweiten Phase (Phase B) derart angetrieben wird, dass das paketförmige Gut durch Eingriff des Aufnahmeorgans an seiner Stirnseite gegen die Oberseite des Aufnahmetisches angehoben wird, und dass danach der Aufnahmetisch (1) und die Transporteinrichtung (2) in einer dritten Phase (Phase C) so lange gegenläufig mit gleicher Geschwindigkeit angetrieben werden, bis das Gut vom Aufnahmetisch im wesentlichen unterfahren und von ihm aufnehmbar ist, dadurch gekennzeichnet, dass die Fahrgeschwindigkeit ($V_T$) des Aufnahmeorgans in der zweiten Phase (B) niedriger als in der ersten und der dritten Phase (A,C) ist.

2. Verfahren nach Anspruch 1, dadurch gekennzeichnet, dass entweder das aufzunehmende Gut oder der Aufnahmetisch mittels eines Hubwerks höhenverstellbar ist, wobei die Höhenverstellung zum Aufnehmen des Guts jeweils derart erfolgt, dass der Aufnahmetisch (1) mit seinem Aufnahmeorgan (3) oberhalb der Stirnflächenunterkante des Guts liegt und das Aufnahmeorgan von der Unterlage beabstandet ist.

3. Verfahren nach einem der vorangehenden Ansprüche, dadurch gekennzeichnet, dass das Aufnahmeorgan (3) und die Transporteinrichtung (2) auf dem Aufnahmetisch vom gleichen zweiten Antrieb (M 2) angetrieben werden, wobei dieser zweite Antrieb (M 2) unmittelbar vor oder bei der Anlage des Aufnahmeorgans an der Stirnfläche des Guts in Gang gesetzt wird, um ein erstes Geschwindigkeitsmaximum bei der Aufnahme des Guts zu erreichen, anschliessend synchron zum ersten Antrieb läuft, bis das Gut unterfahren ist.

4. Verfahren nach einem der vorangehenden Ansprüche, dadurch gekennzeichnet, dass zum ortsbestimmten Absetzen des Guts der Aufnahmetisch (1) bei stillstehender Transporteinrichtung (2) über die Absetzstelle verfahren wird, und dass dort die Transporteinrichtung (2) in Gang gesetzt und gegenläufig mit im wesentlichen der gleichen Geschwindigkeit wie die Fahrgeschwindigkeit angetrieben wird, so dass das Gut bezüglich der Absetzstelle stillsteht und sich der Aufnahmetisch (1) darunter weg bewegt.

5. Verfahren nach Anspruch 4, dadurch gekennzeichnet, dass der Aufnahmetisch zwischen mindestens einer Aufnahmestelle (10) und einer Absetzstelle (12) verfahrbar ist, die so nebeneinander angeordnet sind, dass ein Aufnahmevorgang jeweils mit einem Absetzvorgang verbunden ist.

6. Vorrichtung zur Durchführung des Verfahrens nach einem der vorangehenden Ansprüche mit einem horizontal verfahrbaren Aufnahmetisch (1), der an seiner Oberseite eine antreibbare Transporteinrichtung (2) für das Gut aufweist, mittels der es in Fahrrichtung des Tisches und in Gegenrichtung darauf zwischen zwei Tischenden verschiebbar ist, sowie mit an den entsprechenden Tischenden angeordneten, ebenfalls antreibbaren rollen- bzw. umlenkrollenartigen Aufnahmeorganen (3, 4) zum Angreifen an Vertikalflächen des aufzunehmenden Guts, um dieses auf Tischhöhe anzuheben, wobei ein erster Antrieb (M 1) zum Verfahren des Tisches und mindestens ein zweiter Antrieb (M 2) für die Aufnahmeorgane bzw. die Transporteinrichtung vorgesehen sind, die mit einer Antriebssteuerung verbunden sind, dadurch gekennzeichnet, dass die Antriebssteuerung jeden dieser Antriebe in Abhängigkeit von der Position des Aufnahmetisches bzw. des Guts und desssen Absetzstelle so steuert, dass der erste Antrieb vor und nach dem Angreifen des aufzunehmenden Guts eine höhere Geschwindigkeit hat als während dem Angreifen des aufzunehmenden Guts.

7. Vorrichtung nach Anspruch 6, dadurch gekennzeichnet, dass der Aufnahmetisch (1) als auf Schienen (18; 31) zwischen mindestens einer Aufnahmestelle und mindestens einer Absetzstelle verfahrbarer Schlitten ausgebildet ist.

8. Vorrichtung nach einem der Ansprüche 6 und 7, dadurch gekennzeichnet, dass der Aufnahmetisch und/oder die Gutunterlage an der Aufnahmestelle und/oder die Gutunterlage an der Absetzstelle mit einem Hubwerk (35; 37) in ihrer Höhe verstellbar sind.

9. Vorrichtung nach einem der Ansprüche 6 bis 8, dadurch gekennzeichnet, dass der Aufnahmetisch bzw. Schlitten (1) im wesentlichen zwischen zwei aussenliegenden Aufnahmestellen (10, 11) und einer zwischen diesen liegenden Absetzstelle (12) verfahrbar ist.

10. Vorrichtung nach einem der Ansprüche 6 bis 9, dadurch gekennzeichnet, dass die Transporteinrichtung (2) des Aufnahmetisches (1) durch um den Tisch laufende Transportbänder gebildet ist, und dass an den entsprechenden Tischenden Umlenkrollen (4) für die Transportbänder vorgesehen sind wobei die umgelenkten Bänder und/oder separate Rollenteile (22) die Aufnahmeorgane bilden.

11. Vorrichtung nach Anspruch 10, dadurch gekennzeichnet, dass die als Aufnahmeorgane vorgesehenen Transportbänder aussenseitig mit elastischem Belag mit hohem Reibungskoeffizienten versehen sind.

12. Vorrichtung nach Anspruch 10, dadurch gekennzeichnet, dass der zweite Antrieb (M 2) mindestens auf einer Seite die Umlenkrollen (4) und über diese die Transportbänder (2) antreibt.

13. Vorrichtung nach einem der Ansprüche 6 bis 12, dadurch gekennzeichnet, dass der Aufnahmetisch auf einer stationären Schienenanlage (18, 19) angeordnet ist, welche sich über zwei aussenliegende Aufnahmestellen (10, 11) und eine zwischen diesen liegenden Absetzstelle (12) ersteckt, wobei die Aufnahmestellen mit Gutbeschickungseinrichtungen und die Absetzstelle mit Gutwegführeinrichtungen versehen sind.

14. Vorrichtung nach einem der Ansprüche 6 bis 12, dadurch gekennzeichnet, dass der Aufnahmetisch (1) in einer Kommissionieranlage (30) angeordnet ist, welche mittels eines schienengebundenen oder eines Flur-Fahrzeuges in einem Lagergang zwischen Regalwänden verfahrbar ist, wobei die Aufnahmestellen durch die Regale (32) gebildet sind, und dass der Aufnahmetisch (1) über eine Absetzstelle in der Kommissionieranlage (30) und von dort in die Regale hinein verfahrbar ist, um das Gut in einem Regal aufzunehmen und an der Absetzstelle abzusetzen.

15. Vorrichtung nach Anspruch 14, dadurch gekennzeichnet, dass die Kommissionieranlage ferner mindestens einen daraus entnehmbaren Behälter (36) zur Aufnahme mehrerer Stücke des Guts aufweist, wobei der Behälter mehrere einschiebbare Gut-Träger (34) besitzt, wobei jeder Gut-Träger mittels eines Verschiebeorgans an die Absetzstelle und zurück in den Behälter (36) bringbar ist, derart, dass mittels des Aufnahmetisches (1) darauf ein Gut absetzbar und der Träger danach mit dem Gut in den Behälter (36) verschiebbar ist.

**Claims**

1. Method for taking up and setting down, respectively, of package-like articles from or onto, respectively, a support by means of a horizontally displaceable receiving table (1), wherein the receiving table possesses at least at its upper side a transport installation (2) for the articles and at least at its end facing the direction of displacement a roller-like or guide roller like pick-up member (3), wherein the receiving table (1) is displaced by means of a first drive (M1) in a first phase (phase A) up to a vertical front face if the article to be picked up, wherein the pick-up member (3) is driven by means of a second drive (M2) at least from this moment in a second phase (phase B) such that the package-like article is lifted towards the upper side of the receiving table by engagement of the pick-up member at its front face and that thereafter the receiving table (1) and the transporting installation (2) are driven in opposite directions with the same speed in a third phase (phase C) until the article is substantially supported by the receiving table and can be taken up by it, characterized in that the driving speed ($V_T$) of the pick-up member is lower in the second phase (B) than in the first and the third phase (A, C).

2. Method of claim 1, characterized in that either the article to be picked up or the receiving table are adjustable in height by means of a lifting mechanism, wherein the lifting adjustment for taking up the article is carried out such that the receiving table (1) with its pick-up member (3) is above the lower edge of the front face of the article and the pick-up member is at a distance from the support.

3. Method of one of the preceding claims, characterized in that the pick-up member (3) and the transport installation (2) on the receiving table are driven by the same second drive (M2), wherein this second drive (M2) is set into operation immediately before or upon contact of the pick-up member with the front face of the article for reaching a first speed maximum during taking up of the article and run thereupon synchronously with the first drive until the article is supported.

4. Method of one of the preceding claims, characterized in that for spatially accurate setting down of the article the receiving table (1) is driven with stationary transport installation (2) over the setting down location and that the transport installation (2) is put into operation there and driven in opposite direction with substantially the same speed as the driving speed, such that the article stands still in respect to the setting down location and the receiving table (1) is moved away from thereunder.

5. Method of claim 4, characterized in that the receiving table is displaceable between at least one taking-up location (10) and a setting down location (12) which are arranged side by side such that a taking up procedure is coupled with a setting down procedure.

6. Apparatus for carrying out the method of one of the preceding claims with a horizontally displaceable receiving table (1) comprising a driveable transport installation (2) on its upper side for the article, by means of which the article is displaceable thereon in driving direction of the table and in counter direction between to table ends, as well as with roller or guide roller like pick-up members (3, 4) arranged at the respective table ends and also being driveable for engaging the vertical faces of the article to be picked up to lift it to the table height, wherein a first drive (M1) for displacing the table and at least a second drive (M2) for the pick-up members or the transport installation, respectively, are provided, which are connected to a drive control, characterized in that the drive control controls each of said drives in dependence of the position of the receiving table or the article, respectively, and its setting down location, such that prior and after engaging of the article to be picked up the first drive has a higher speed than during engaging of the article to be picked up.

7. Apparatus of claim 6, characterized in that the receiving table (1) is designed as a sleigh displaceable on rails (18; 31) between at least one taking up location and at least one setting location .

8. Apparatus of one of the claims 6 and 7, characterized in that the receiving table and/or the support of the article at the taking up location and/or the support of the article at the setting down location is adjustable in height by means of a lifting mechanism (35; 37).

9. Apparatus of one of the claims 6 to 8, characterized in that the receiving table or the sleigh (1), respectively, are displaceable substantially between two peripheral taking up locations (10, 11) and a setting down location (12) arranged therebetween.

10. The apparatus of one of the claims 6 to 9, characterized in that the transport installation (2) of the receiving table (1) is formed by conveyor belts running around the table and that guide rollers (4) for the conveyor belts are provided on the corresponding table ends, wherein the guided belts and/or separate roller parts (22) are forming the pick-up members.

11. Apparatus of claim 10, characterized in that the conveyor belts intended as pick-up members are provided with an elastic coating with high friction coefficient on their outer side.

12. Apparatus of claim 10, characterized in that the second drive (M2) drives the guiding rollers (4) at least at one side and via these the conveyor belts (2).

13. Apparatus of one of the claims 6 to 12, characterized in that the receiving table is arranged on a stationary rail plant (18, 19), which extends over two peripheral taking up locations (10, 11) and a setting down location (12) arranged therebetween, wherein the taking up locations are provided with article feeding installations and the setting down location with article removal installations.

14. Apparatus of one of the claims 6 to 12, characterized in that the receiving table (1) is arranged in a collating plant (30), which is displaceable in a warehouse alley between shelf walls by means of a track-bound vehicle or an alley vehicle, wherein the taking up locations are formed by the shelves (32) and that the receiving table (1) is displaceable over a setting down location in the collating plant (30) and from there into the shelves for taking up the article from a shelf and setting it down at the setting down location.

15. Apparatus of claim 14, characterized in that the collating plant further comprises at least one container (36) removable therefrom for receiving several pieces of the articles, wherein the container comprises several insertable article carriers (34), wherein each article carrier can be brought to the setting down location and back into the container (36) by means of a displacement means such that a article can be set down thereon by means of the receiving table (1) and the carrier support can thereafter be moved back with the article into the container (36).

**Revendications**

1. Procédé pour prendre un produit en paquets sur un support, respectivement pour l'y poser au moyen d'une table réceptrice (1) mobile horizontalement, celle-ci comportant au moins à sa surface supérieure un convoyeur motorisé (2) pour le produit, et au moins à son extrémité située en direction de son avance un organe de chargement (3) en forme de rouleau ou de rouleau de renvoi, un premier dispositif d'entraînement (M 1) mouvant la table réceptrice (1) en une première phase (phase A) jusqu'à une face verticale de produit à charger, l'organe de chargement (3) étant actionné au moins à partir de ce moment au moyen d'un second dispositif d'entraînement (M 2) lors d'une seconde phase (phase B) de manière à soulever le produit en paquets en direction de la surface supérieure de la table réceptrice par l'action de l'organe de chargement contre sa surface frontale, et qu'ensuite la table réceptrice (1) et le convoyeur (2) sont entraînés à la même vitesse et en sens contraires lors d'une troisième phase (phase C) jusqu'à ce que la table réceptrice se soit essentiellement insérée sous le produit et puisse le porter, caractérisé en ce que la vitesse d'avance ($V_T$) de l'organe de chargement lors de la seconde phase (B) est inférieure à celle lors de la première et de la troisième phase (A, C).

**2.** Procédé selon la revendication 1, caractérisé en ce que la hauteur soit du produit, soit de la table réceptrice est réglable au moyen d'un dispositif de levage, le réglage pour le chargement du produit étant effectué de façon à ce que la table (1) avec son organe de chargement (3) se trouve au-dessus de l'arête frontale inférieure du produit, et que l'organe de chargement se trouve à distance du support.

**3.** Procédé selon l'une des revendications précédentes, caractérisé en ce que l'organe de chargement (3) et le convoyeur (2) sur la table réceptrice sont actionnés par le même dispositif d'entraînement (M2), celui-ci étant mis en route immédiatement avant le contact de l'organe de chargement avec la face frontale du produit ou au moment de ce contact afin d'atteindre un premier maximum de vitesse lors du chargement du produit, et qu'il fonctionne ensuite en synchronisme avec le premier dispositif d'entraînement jusqu'à l'insertion sous le produit.

**4.** Procédé selon une des revendications précédentes pour déposer le produit en un site déterminé, caractérisé en ce que la table (1) est amenée, convoyeur (2) arrêté, au-dessus de ce site, que le convoyeur (2) y est alors mis en marche et entraîné à essentiellement la vitesse d'avance de manière à ce que le produit reste immobile par rapport au site de dépôt et que la table (1) se dérobe sous le produit.

**5.** Procédé selon la revendication 4, caractérisé en ce que la table réceptrice est mobile au moins entre un site de chargement (10) et un site de déchargement (12) disposés côte à côte de façon à ce que chaque chargement est associé à un déchargement.

**6.** Dispositif pour la réalisation du procédé selon une des revendications précédentes, avec une table réceptrice (1) mobile horizontalement, comportant à sa partie supérieure un convoyeur (2) motorisé pour le produit, au moyen duquel ce dernier peut être déplacé entre deux extrémités de la table en direction d'avance de celle-ci ainsi qu'en direction opposée, et avec des organes (3, 4) de chargement également motorisés disposés à ces extrémités de la table, ces organes en forme de rouleau ou de rouleau de renvoi étant prévus pour attaquer une face verticale du produit à charger pour le soulever à la hauteur de la table, un premier dispositif d'entraînement (M 1) étant prévu pour déplacer la table et au moins un second dispositif d'entraînement (M 2) étant prévu pour les organes de chargement, respectivement pour le convoyeur, et connectés à une unité de commande, caractérisé en ce que l'unité de commande commande chaque dispositif d'entraînement en fonction de la position de la table réceptrice, du produit et de l'endroit où il doit être déposé, de manière à ce qu'avant et après la prise de contact avec le produit le premier dispositif d'entraînement ait une vitesse supérieure à sa vitesse lors de la prise de contact avec le produit.

**7.** Dispositif selon la revendication 6, caractérisé en ce que la table (1) se présente sous forme d'un chariot sur rail (18; 31) mobile entre au moins un site de chargement et au moins un site de déchargement.

**8.** Dispositif selon une des revendications 6 et 7, caractérisé en ce que la table réceptrice et/ou le support du produit sur le site de chargement et/ou le support du produit sur le site de déchargement comporte un dispositif de levage (35; 37) réglable en hauteur.

**9.** Dispositif selon une des revendications 6 à 8, caractérisé en ce que la table réceptrice, respectivement le chariot récepteur (1) est essentiellement mobile entre deux sites extérieurs de chargement (10, 11) et un site de déchargement (12) situé entre eux.

**10.** Dispositif selon une des revendications 6 à 9, caractérisé en ce que le convoyeur (2) de la table (1) est formé par des tapis roulants entourant la table, et que des rouleaux de renvoi (4) pour les tapis sont prévus aux extrémités correspondantes de la table, les organes de chargement étant formés par les tapis à l'endroit où ils sont renvoyés et/ou par des rouleaux séparés (22).

**11.** Dispositif selon la revendication 10, caractérisé en ce que les tapis roulants faisant office d'organes de chargement comportent du côté extérieur une couche élastique à haut coefficient de friction.

**12.** Dispositif selon la revendication 10, caractérisé en ce que le second dispositif d'entraînement (M 2) actionne les rouleaux de renvoi (4) d'au moins un côté et, à partir de ceux-ci, les tapis convoyeur (2).

**13.** Dispositif selon une des revendications 6 à 12, caractérisé en ce que la table réceptrice est disposée sur des rails fixes (18, 19) s'étendant sur deux sites extérieurs de chargement (10, 11) et un site de déchargement (12) situé entre les deux, les sites de chargement comprenant des unités d'alimentation en produit et les sites de déchargement comprenant des unités d'évacuation du produit.

14. Dispositif selon une des revendications 6 à 12, caractérisé en ce que la table réceptrice (1) est disposée dans une unité de distribution (30) déplaçable au moyen d'un véhicule sur rails ou sur le sol entre des étagères bordant les allées d'un entrepôt, les sites de chargement étant formés par les étagères (32), et en ce que la table (1) peut être placée sur un site de déchargement (30) dans l'unité de distribution (30) et déplacée à partir de là jusque dans les étagères pour prendre en charge le produit dans une étagère et le déposer sur le site de déchargement.

15. Dispositif selon la revendication 14, caractérisé en ce que l'unité de distribution (30) comporte au moins un récipient amovible (36) pour recevoir plusieurs paquets de produit, le récipient comprenant plusieurs tiroirs (34) pouvant chacun être amené au site de déchargement et être retourné dans le récipient (36) au moyen d'un organe de déplacement, de manière à pouvoir y déposer un produit au moyen de la table (1) et à pouvoir ensuite déplacer le tiroir avec le produit jusque dans le récipient (36).

*Fig. 1*

Fig. 2

Fig. 3

Fig. 4

_Fig. 5_

_Fig. 6_

EP 0 462 518 B1

_Fig. 7_

_Fig. 8_

15

_Fig. 9_

_Fig. 10_

Fig. 11

Fig. 12

Fig. 13

Fig. 14

Fig. 15

Fig. 16